# EUROPÄISCHE PATENTSCHRIFT

(11) **EP 1 634 130 B1**
(45) Veröffentlichungstag und Bekanntmachung des Hinweises auf die Patenterteilung: **13.11.2013**
(21) Anmeldenummer: 04731008.1
(22) Anmeldetag: 04.05.2004
(51) Int. Cl.: G05B 19/05, G05B 19/418

(54) **VORRICHTUNG UND VERFAHREN ZUR PROGRAMMIERUNG UND/ODER AUSFÜHRUNG VON PROGRAMMEN FÜR INDUSTRIELLE AUTOMATISIERUNGSSYSTEME**
DEVICE AND METHOD FOR PROGRAMMING AND/OR EXECUTING PROGRAMS FOR INDUSTRIAL AUTOMATION SYSTEMS
DISPOSITIF ET PROCEDE POUR PROGRAMMER ET/OU POUR EXECUTER DES PROGRAMMES POUR DES SYSTEMES D'AUTOMATISATION INDUSTRIELS

(30) Priorität: 18.06.2003 DE 10327614
(43) Veröffentlichungstag der Anmeldung: 15.03.2006
(73) Patentinhaber: Siemens Aktiengesellschaft, 80333 München (DE)
(72) Erfinder: THURNER, Elmar, 90491 Nürnberg (DE)
(86) Internationale Anmeldenummer: PCT/EP2004/004740
(87) Internationale Veröffentlichungsnummer: WO 2004/111738

(56) Entgegenhaltungen:
- EP-A- 1 296 232
- WO-A-97/26587
- DE-A- 10 132 036
- DE-A- 10 138 533
- SIEMENS AG, PRESSSEABTEILUNG: "Siemens verleiht erfinderpreis 2002" 17. Dezember 2002 (2002-12-17), SIEMENS AG , MÜNCHEN , XP002294786 Gefunden im Internet: URL:http://w4.siemens.de/ct/de/news/2002_2 003/ct200212004d.pdf> Seite 6 - Seite 7

## Beschreibung

Die Erfindung betrifft eine Vorrichtung und ein Verfahren zur Programmierung und/oder Ausführung von Programmen für industrielle Automatisierungssysteme.

Ein gattungsgemäßes Verfahren zur Programmierung industrieller Automatisierungssysteme im Sinne des Oberbegriffs des Patentanspruchs 1 basiert auf mindestens einer Rechnereinheit mit Eingabehilfsmitteln, Ausgabehilfsmitteln, sowie vorzugsweise mindestens einer Anzeigevorrichtung. Bausteine und Funktionen, die jeweils Teilaufgaben einer Automatisierungslösung repräsentieren, werden mit den Eingabehilfsmitteln und gegebenenfalls der Anzeigevorrichtung modelliert und/oder erstellt. Den Bausteinen und Funktionen können Modellinformationen und/oder Metainformationen mit den Eingabehilfsmitteln und der Anzeigevorrichtung zugeordnet werden. Die Bausteine und Funktionen werden mit den Eingabehilfsmitteln und gegebenenfalls der Anzeigevorrichtung strukturiert und vernetzt, um so als mindestens ein maschinen-unabhängiges Programm mindestens einen hierarchischen Baum zu bilden.

Derartige Verfahren sind aus dem Stand der Technik bekannt.

So offenbart die Europäische Veröffentlichungsschrift EP 1 296 232 A2 z.B. ein Programmiersystem für eine speicherprogrammierbare Steuerung mit einem Webserver welcher über Internet vermittels eines Web-Browsers bedient werden kann. Dabei wird das erstellte Programm im Webserver-Computer in eine Spezial-Maschinensprache für die Steuerung übersetzt und an den Bediener-Computer geliefert.

Die PCT-Veröffentlichungsschrift WO 97/26587 A1 wird ein Engineering-System für speicherprogrammierbare Steuerungen offenbart, wobei mit dem Engineering-System erstellte Steuerprogramme in eine Maschinensprache übersetzt und dann auf entsprechende Steuerungen übertragen werden können.

Die Veröffentlichung "Siemens verleiht Erfinderpreis 2002" der Siemens AG vom 17.12.2002 (URL: http://w4.siemens.de/ct/de/news/2002_2003/ct200212004d.pdf) beschreibt ein graphisches Modell für maschinelle Abläufe für eine Maschinensteuerung, wobei die Maschinensteuerung dieses Modell ohne eine Übersetzung direkt versteht.

Die DE-Offenlegungs-Schrift DE 101 38 533 A1 offenbart die Verwendung von XML-Dateien im Rahmen der Projektierung bzw. des Engineerings von Programmen für Steuerungsanlagen. Dabei werden die im Engineering-System derart erstellten Programme aus dem XML-Format in eine spezielle Maschinensprache compiliert und als solche in das Steuerungssystem übertragen.

In klassischen Programmiersprachen, wie zum Beispiel Pascal oder Fortran, werden Daten, Bausteine und Funktionen getrennt. Erst im Zuge des Paradigmas der Objektorientierung wurden Daten und Funktionen zu Objekten zusammengeführt. Vereinzelt werden auch Metadaten den Objekten zugeordnet. Metadaten sind Informationen über andere Informationen, zum Beispiel Informationen über vorhandene Objekte. Solche Metadaten sind zwar in einem Gesamtsystem bzw. in einem Gesamtkontext vorhanden, sie sind aber in Automatisierungssystemen weder physikalisch in einem Objekt hinterlegt, noch enthalten sie Wissen über die zu realisierende Applikation für eine industrielle Anlage oder über den zu realisierenden Prozess. Programmierbare Automatisierungssysteme bzw. MES-Systeme, das heißt Systeme zur Steuerung und/oder Regelung von automatisierten Prozessen oder Anlagen, enthalten in der Regel ein so genanntes Laufzeitsystem zur zeitlichen Ablaufsteuerung einer Automatisierungskomponente einer Maschine oder eines Systems. Des weiteren verfügen derartige Systeme über eine Engineering-Vorrichtung zum Erstellen und Editieren von Steuerungsprogrammen und Anlagefunktionen. Die mithilfe der Engineering-Vorrichtung erstellten Steuerungsprogramme und Anlagefunktionen werden im Laufzeitsystem ausgeführt.

Es zählt bereits zum noch nicht veröffentlichten Stand der Technik, Automatisierungssysteme dadurch zu programmieren, dass in einer Engineering-Vorrichtung Objekte, die jeweils Teilaufgaben einer Automatisierungslösung repräsentieren, mithilfe von Eingabehilfsmitteln und einer Anzeigevorrichtung modelliert werden. Derartigen Objekten werden ebenfalls über die Eingabehilfsmittel und die Anzeigevorrichtung Modellinformationen sowie Metainformationen zugeordnet. Die Objekte werden dann als hierarchische Bäume strukturiert und vernetzt, um so mindestens ein maschinen-unabhängiges Programm bereitzustellen.

Nach dem Stand der Technik wird das oder jedes mithilfe der Engineering-Vorrichtung erzeugte maschinen-unabhängige Programm in einer oder in mehreren Stufen in ein maschinen-abhängiges Automatisierungsprogramm für die Komponenten des Automatisierungssystems umgewandelt. Dies erfolgt nach dem Stand der Technik ausgehend von der visuellen Repräsentation bei der Programmierung, wobei die visuelle Repräsentation in eine imperative, sequentielle Maschinensprache bzw. einen Maschinencode umgesetzt werden. Dieser sequentielle Maschinencode wird nach dem Stand der Technik zur Ausführung auf eine Automatisierungskomponente, zum Bespiel eine speicherprogrammierbare Steuerung (SPS), geladen.

Der imperative, sequentielle Maschinencode stellt demnach das nach dem Stand der Technik übliche maschinen-abhängige Automatisierungsrogramm dar, welches in dieser Form auf die Komponenten bzw. Automatisierungseinrichtungen des Automatisierungssystems geladen wird. Automatisierungsprogramme, welche auf die oben beschriebene Art nach dem Stand der Technik erzeugt werden, sind jedoch unflexibel, da sie zur Laufzeit nur schlecht änderbar sind. Des weiteren sind derartige Automatisierungsprogramme nur auf den speziellen Komponenten eines Automatisierungssystems verwendbar, für die der entsprechende Maschinencode erzeugt worden ist. Die Programme sind demnach nicht flexibel verwendbar.

Hiervon ausgehend liegt der vorliegenden Erfindung das Problem zu Grunde, ein neuartiges Verfahren und eine neuartige Vorrichtung zur Programmierung und/oder Ausführung von Programmen für industrielle Automatisierungssysteme zu schaffen.

Dieses Problem wird dadurch gelöst, dass das eingangs genannte Verfahren durch die Merkmale des Patentanspruchs 1 weitergebildet ist.

Erfindungsgemäß wird das oder jedes maschinen-unabhängige Programm in Form mindestens eines hierarchischen Baums in die entsprechenden Komponenten des Automatisierungssystems geladen, wobei die entsprechenden Komponenten des Automatisierungssystems das oder jedes maschinen-unabhängige Programm vorzugsweise mit Hilfe mindestes einer denselben zugeordneten Objektmaschine direkt ausführen. Das oder jedes maschinen-unabhängige Programm liegt in Form mindestens eines ausführbaren, hierarchischen Operatorbaums vor.

Die erfindungsgemäße Vorrichtung zur Programmierung industrieller Automatisierungssysteme ist im unabhängigen Patentanspruch 14 definiert.

Bevorzugte Weiterbildungen der Erfindung ergeben sich aus den Unteransprüchen und der nachfolgenden Beschreibung.

Nachfolgend werden bevorzugte Ausführungsbeispiele der Erfindung - ohne hierauf beschränkt zu sein - anhand der Zeichnung näher erläutert. In der Zeichnung zeigt:
- Fig. 1:: eine Darstellung einer Automatisierungs-Pyramide mit drei Steuerungsebenen,
- Fig. 2:: eine schematische Darstellung einer Engineeringvorrichtung, eines Laufzeitsystems und einem zu steuernden technischen Prozess,
- Fig. 3:: eine schematische Darstellung eines Objekts,
- Fig. 4:: schematische Darstellung eines Programms, und
- Fig. 5:: eine schematische Darstellung des Programms gemäß Fig. 4 in Baumstruktur.

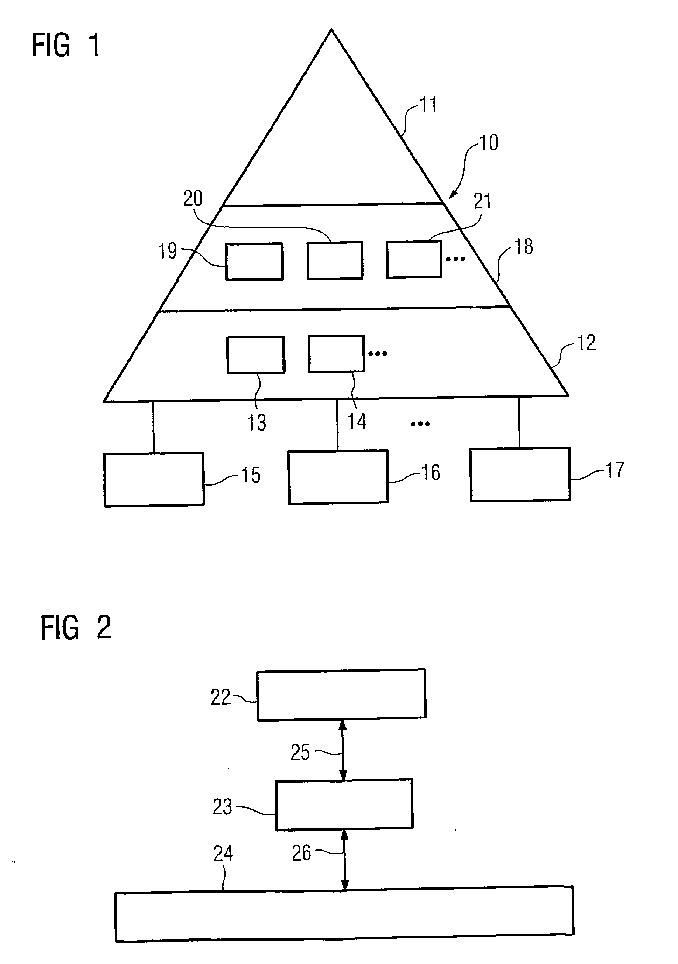

Fig. 1 zeigt in einer prinzipiellen Übersichtsdarstellung drei Steuerungsebenen, wie sie üblicherweise in einem produzierenden Unternehmen zu finden sind. Durch eine Pyramide 10 wird verdeutlicht, dass nach oben hin eine Verdichtung der Informationen stattfindet.

Die oberste Ebene ist die ERP-Ebene 11 (Enterprise Resource Planning-Ebene). Auf dieser ERP-Ebene 11 bzw. Unternehmensleitebene werden üblicherweise betriebswirtschaftliche und vertriebliche Aufgaben in einem Unternehmen projektiert und durchgeführt, so zum Beispiel Finanzwesen, Vertriebswesen, Personalwesen und Berichterstattung. Aber auch Produktionsanlagen übergreifende, logistische Aufgaben, wie zum Beispiel Materialverwaltung, werden auf dieser ERP-Ebene 11 durchgeführt. Das SAPR/3-System ist zum Beispiel ein ERP-System, das auf der Unternehmensleitebene sehr häufig verwendet wird.

Die unterste Ebene der Pyramide gemäß Fig. 1 ist die so genannte Automatisierungsebene 12. Auf dieser Ebene kommen üblicherweise speicherprogrammierbare Steuerungen (SPS) 13 in Verbindung mit Visualisierungssystemen und Prozessleitsystemen (PLS) 14 zum Einsatz. Die Antriebe 15, Aktuatoren 16 und Sensoren 17 von Produktions- und/oder Fertigungseinrichtungen stehen direkt mit der Automatisierungsebene 12 in Verbindung.

Das Verbindungsglied zwischen der ERP-Ebene 11 und der Automatisierungsebene 12 ist die MES-Ebene 18. Die Applikationen der MES-Ebene 18 sorgen somit für eine vertikale Integration zwischen der ERP-Ebene 11 und der Automatisierungsebene 12. Die MES-Applikationen müssen einerseits die Grobplanungen der ERP-Ebene 11 um produktionsanlagenspezifische Feinplanungen ergänzen und an die Systeme der Automatisierungsebene 12 weiterleiten, andererseits ist es Aufgabe der MES-Applikationen produktionsrelevante Daten der Automatisierungsebene 12 aufzunehmen, aufzubereiten und an die ERP-Ebene 11 weiterzuleiten. Typische MES-Applikationen sind unter anderem das Quality Management 19, Maintenance Management 20, Performance Analysis 21, Process Management oder auch Asset Management.

Durch die jeweils drei Punkte wird in Fig. 1 verdeutlicht, dass sich auch auf einer Ebene weitere Elemente bzw. Applikationen befinden können.

Die Automatisierungsebene 12, die MES-Ebene 18 bzw. MES-Einrichtung oder die ERP-Ebene 11 oder ERP-Einrichtung enthalten in der Regel ein so genanntes Laufzeitsystem zur zeitlichen Ablaufsteuerung der beteiligten Komponenten (Teilkomponenten, Module, Tasks, Prozesse des Betriebssystems usw.). Des weiteren enthalten diese Ebenen bzw. Einrichtungen eine so genannte Engineering-Vorrichtung zum Erstellen und Editieren von Programmen, welche zur Ausführung im Laufzeitsystem vorgesehen sind.

Fig. 2 zeigt stark schematisiert eine Engineering-Vorrichtung 22, ein Laufzeitsystem 23 und einen zu steuernden technischen Prozess 24. Die Verbindung zwischen dem Laufzeitsystem 23 der Steuerung bzw. des Automatisierungssystems und dem technischen Prozess 24 erfolgt bidirektional über Ein- und/oder Ausgabeverbindungen 26. Die Programmierung erfolgt in der Engineering-Vorrichtung 22. Die Engineering-Vorrichtung 22 enthält Werkzeuge für die Konfiguration, Programmierung und Projektierung technischer Prozesse, wie zum Beispiel industrieller Anlagen. Die in der Engineering-Vorrichtung 22 erstellten Programme werden über einen Informationspfad 25 in das Laufzeitsystems 23 der MES-Vorrichtung bzw. der ERP-Vorrichtung bzw. eines sonstigen Zielsystems übertragen.

Die Engineering-Vorrichtung 22 umfasst üblicherweise ein Computersystem mit Grafikbildschirm, Eingabehilfsmitteln, wie Tastatur und Maus, Prozessor, Arbeitsspeicher und Sekundärspeicher, eine Einrichtung für die Aufnahme computerlesbarer Medien, wie Disketten und CDs, sowie Anschlusseinheiten für einen Datenaustausch mit anderen Systemen. Die Engineering-Vorrichtungen 22 umfassen Editoren und grafische Werkzeuge für die Modellierung und Programmierung von Anlagen und Steuerungen. Bei Engineering-Vorrichtungen, die nicht objektorientiert sind, erfolgt die Erstellung maschinen-unabhängiger Programme mit Hilfe von grafischen Kontaktplänen, Funktionsplänen, Sequence Function Charts oder Continuous Function Charts. Bei objektorientierten Engineering-Vorrichtungen erfolgt die Programmerstellung mit Hilfe objektorientiert. Insbesondere unterstützen objektorientierte Engineering-Vorrichtungen 22 die Objektorientierung, wie die Erstellung von Objekten, die Erstellung von Klassen, die Erstellung von Oberklassen sowie die Darstellung von Vererbungsbeziehungen.

Über Editoren, Maskeneingabe oder über Drag&Drop-Mechanismen werden Datenbausteine, Funktionsbausteine oder Objekte vorzugsweise mit Metainformationen verknüpft und als hierarchische Bäume strukturiert und miteinander vernetzt. Die mithilfe einer solchen Engineering-Vorrichtung 22 erstellten Programme bzw. Steuerungen bzw. Anlagenspezifikationen sind maschinen-unabhängig.

Die mithilfe der Engineering-Vorrichtung 22 erstellten Programme müssen letztendlich auf einem Zielsystem, zum Beispiel auf den Komponenten des Automatisierungssystems, ausgeführt werden, um den technischen Prozess 24 zu steuern. Bevor jedoch hierauf eingegangen wird, sollen nachfolgend noch die Zusammenhänge bei der Erstellung maschinen-unabhängiger Programme dargestellt werden.

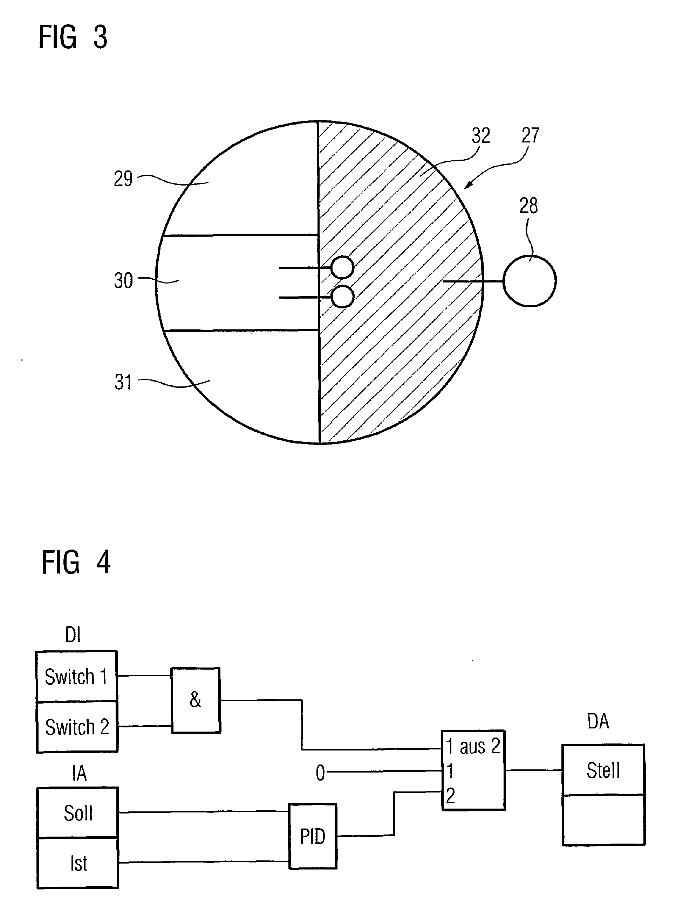

Fig. 3 zeigt stark schematisiert die Darstellung eines Objekts 27 mit einem Objektinterface 28. Solche Objekte 27 können bei allen Arten des Engineerings, wie zum Beispiel Chemical Engineering, Product Engineering, Software Engineering usw., verwendet werden. Ein Objekt 27 ist allgemein ein Gegenstand oder ein Element einer Domäne bzw. einer Diskurswelt. In der objektorientierten Softwareentwicklung ist ein Objekt 27 ein individuelles Exemplar von Dingen oder Sachen, Personen oder Begriffen der realen Welt oder der Vorstellungswelt. Ein Objekt 27 besitzt einen bestimmten definierten Zustand und reagiert mit einem definierten Verhalten auf seine Umgebung. Außerdem besitzt ein derartiges Objekt 27 eine Objektidentität, die es von allen anderen Objekten unterscheidet und die es erlaubt, auf ein anderes bestimmtes Objekt zuzugreifen. Ein Objekt kann ein oder mehrere andere Objekte kennen. Zwischen Objekten, die sich kennen, bestehen Verbindungen oder Verzweigungen bzw. Vernetzungen. Der Zustand eines Objekts 27 wird durch seine Daten bzw. Attributwerte und die jeweiligen Verbindungen zu anderen Objekten bestimmt. Das Verhalten eines Objekts wird durch seine Menge von Methoden bzw. Operationen definiert. In der Objektorientierung wird durch eine Klasse der Typ eines Objekts beschrieben. Aus dieser Typbeschreibung können konkrete Instanzen, die dann ein konkretes programmiersprachliches Objekt darstellen, erzeugt werden. Mithilfe von Objektdiagrammen lassen sich Objekte und ihre Verbindungen grafisch darstellen. Solche Editoren für Objektdiagramme sind Teil von objektorientierten Engineering-Vorrichtungen. Diese Diagramme können von einem Anwender in einer solchen objektorientierten Engineering-Vorrichtung editiert und bearbeitet werden.

Der linke Teil der Darstellung der Fig. 3 zeigt Informationen bzw. Elemente, die ein Objekt 27 üblicherweise enthält. Bei Daten 29 kann es sich zum Beispiel um einen aktuellen Messwert oder um einen Stellwert handeln. Methoden 30 repräsentieren ausführbare Tätigkeiten im Sinne eines Algorithmus, zum Beispiel eine UND-Verknüpfung oder einen Regelalgorithmus. Die Menge der Methoden bestimmt das Verhalten einer Objektklasse bzw. eines von dieser Klasse instantiierten Objekts. Die Methoden 30 eines Objekts können von anderen Objekten verwendet und aufgerufen werden. Weiterhin können die Objekte 27 so genannte Subobjekte 31 umfassen, welche die Objekte für die Realisierung der Methoden 30 benötigen. Durch Subobjekte 31 wird ein Objektbaum gebildet.

Auf der rechten Seite des in Fig. 3 dargestellten Objekts 27 ist schraffiert ein so genannter Container 32 dargestellt. Durch solche Container 32 werden Mechanismen für die Metainformationshaltung und Mechanismen des Zugriffs auf Metainformationen realisiert. Die Container 29 stellen eine Kapselschicht um das Objekt 27 dar, und alle Zugriffe auf ein Objekt erfolgen nur über die Schnittstelle 28. Über die Schnittstelle 28 wird auf die Methoden 30 und Daten 29 und auf die Metainformationen des Objekts 27 zugegriffen. Bei einem Zugriff auf die Daten oder die Methoden kann somit ein Dienst, der das Objekt verwendet, anhand der Metadaten vom konkreten Aufbau und der konkreten Bedeutung der Datenfunktionen abstrahieren. Alle Zugriffe erfolgen, wie bereits erwähnt über die generische Schnittstelle 28. Dadurch ist die Wiederverwendbarkeit und Austauschbarkeit von Objekten 27 möglich. Somit kann auch in komplexen Systemen immer auf dieselbe Art und Weise auf Objekte 27 zugegriffen werden. Insbesondere stellen die so genannten Container 32 Infrastrukturfunktionen, wie Datenvernetzung, Datenspeicherung und Datenvisualisierung in einer einheitlichen Art und Weise für alle Arten von Objekten zur Verfügung. Zu den Infrastrukturfunktionen, die ein Container 32 zur Verfügung stellt, gehören zum Beispiel Trace-Funktionen, das heißt Informationen darüber, wer und wie lange ein Objekt 27 verwendet. Wie bereits erwähnt, enthält der Container 32 auch Metainformationen und Selbstbeschreibungsinformationen für das Objekt 27.

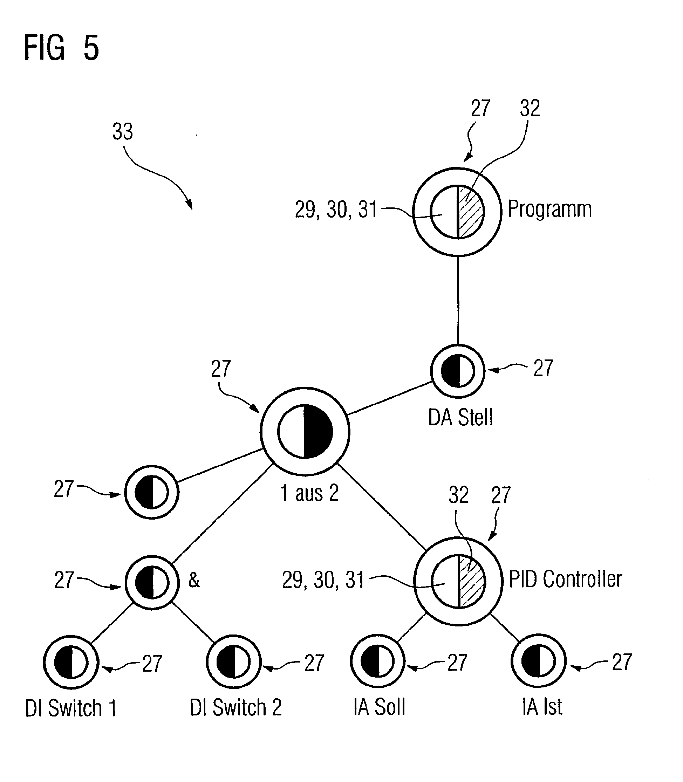

Fig. 4 zeigt ein in der Engineering-Vorrichtung 22 dargestelltes Programm. Fig. 5 zeigt das Programm in Form eines Objekt- bzw. Operatorbaums. So sind die Bausteine und Funktionen des Programms gemäß Fig. 4 in Fig. 5 in Objekte 27 umgesetzt, und zwar in Form eines hierarchischen Baums 33. Die Objekte 27 sind als Doppelkreise dargestellt. Der innere Kreis stellt schematisch den Aufbau eines Objekts im Sinne der Fig. 3 dar. Der linke Teil eines Objekts 27 betrifft wieder die Daten 29, Methoden 30 und Subobjekte 31. Der rechte Teil repräsentiert den so genannten Container 32, der die Metainformationen und die Infrastrukturinformationen für ein Objekt zur Verfügung stellt. Der Container 32 stellt eine Kapselschicht für das Objekt 27 dar. Der Zugriff auf das Objekt erfolgt lediglich über die generische Objektschnittstelle 28. Die Außenkreise um die Objekte visualisieren, dass die Objekte in die optionale Infrastruktur eines Systems eingebettet sind. Die optionale Infrastruktur stellt generische Dienste wie z.B. Speichern und Laden zur Verfügung. Ein Aspekt der Infrastruktur ist die Vernetzung. Der Zugriff auf Infrastrukturdienste bzw. entsprechende Funktionen wird über den Container 32 realisiert und ist für alle Objekte 27 im hierarchischen Baum 33 gleich. Der äußere Kreis eines Objekts 27 stellt also eine Sammlung von Infrastrukturdiensten bzw. Infrastrukturfunktionen dar, die auf die Objekte über deren Container 29 zugreifen. Ein einmal realisierter Infrastrukturdienst kann von allen Objekten 27 in gleicher Weise benutzt werden.

Wie bereits erwähnt, zeigt Fig. 5 exemplarisch eine Struktur eines maschinen-unabhängigen Programms einer zu realisierenden Steuerungsaufgabe als hierarchischen Objektbaum 33, wie er in die Komponenten des Automatisierungssystems geladen und dort abgearbeitet wird. Die einzelnen Objekte 27 des Baums 33 entsprechen Bausteinen und Funktionen des Programms gemäß Fig. 4, wie es in einer Engineering-Vorrichtung editiert wird. Dies folgt unmittelbar aus der textlichen Beschreibung der Programmelemente in Fig. 4 und 5. Die Darstellung gemäß Fig. 4 zeigt einen Kontaktplanen bzw. Funktionsplan. Durch diese Strukturäquivalenz ist die lokale Änderbarkeit des Programms gewährleistet. Durch die den Containern 32 der Objekte 27 zugeordneten Metadaten ist die Rückabbildbarkeit des laufenden Programms auf die Darstellung im Engineering möglich.

Im Sinne der Erfindung wird ein auf der Engineering-Vorrichtung 22 vorzugsweise über Objekte 27 modelliertes bzw. erstelltes maschinen-unabhängiges Programm 33 nicht, wie im Stand der Technik üblich, zuerst in ein maschinen-abhängiges Automatisierungsprogramm in Form eines sequentiellen Maschinencodes gewandelt und dann auf eine Komponente des Automatisierungssystems bzw. ein sonstiges Zielgerät geladen, sondern vielmehr werden die maschinen-unabhängigen Programme in Form hierarchischer Bäume in die entsprechenden Komponenten des Automatisierungssystems geladen. Die Programme werden demnach in Form eines Objekt- bzw. Operatorbaums auf eine SPS oder ein sonstiges Automatisierungsgerät geladen. Ein solcher Objekt- bzw. Operatorbaums ist ein 1:1-Abbild einer Darstellung des Programms. Es handelt sich bei einem solchen Operatorbaum um ein ablauffähiges Programm, welches sämtliche Engineering-Daten für das Programm enthält bzw. enthalten kann.

Die entsprechenden Komponenten des Automatisierungssystems führen das maschinen-unabhängige Programm aus. Das Laden des oder jeden maschinen-unabhängigen Objekt- bzw. Operatorbaums auf die entsprechenden Komponenten des Automatisierungssystems erfolgt unter Verwendung einer maschinen-unabhängigen, symbolischen Repräsentation des Baums zum Beispiel in Form eines Bytecodes oder in Form einer Auszeichnungssprache. Als Auszeichnungssprache kann XML (Extended Mark-up Language) Verwendung finden.

Beim oder nach dem Laden des maschinen-unabhängigen Programms in eine Komponente des Automatisierungssystems erfolgt die Instanziierung der Operatoren. Hierzu dient unter anderem eine Objektmaschine oder auch eine Realtime-Objektmaschine. Die Objektmaschine löst die symbolische Repräsentation des oder jeden hierarchischen Baums 33 des oder jeden maschinen-unabhängigen Engineering-Programms auf, wandelt symbolische Adressen in physikalische Adressen um, und bildet bzw. generiert so ein ablauffähiges Programm in Form eines ausführbaren Objekt- bzw. Operatorbaums. Dieses wird auf der oder jeder Komponente des Automatisierungssystems ausgeführt.

Für das Instanziieren und Ausführen des Programms durch die Komponente des Automatisierungssystems ist, wie bereits erwähnt, der Komponente des Automatisierungssystems die Realtime-Objektmaschine zugeordnet. Die Realtime-Objektmaschine stellt Objekte, zum Beispiel Operatoren, zur Verfügung. Bei den Operatoren handelt es sich um logische Operatoren, wie zum Beispiel AND-Verknüpfungen, OR-Verknüpfungen, NOR-Verknüpfungen oder XOR-Verknüpfungen. Bei den Operatoren kann es sich auch um mathematische Operatoren, wie zum Beispiel Operatoren für die Grundrechenarten, Interpolationsoperatoren oder um Filteroperatoren, handeln. Bei den Objekten handelt es sich vorzugsweise um Datenobjekte bzw. Basisobjekte und Steuerobjekte. Die Basisobjekte umfassen Daten und Eigenschaften. Bei den Eigenschaften handelt es sich zum Beispiel um die maximale Ausführungszeit, den maximalen Speicherverbrauch oder die Transaktionsfähigkeit des Objekts.

Der ausführbare Operatorbaum besteht aus Operatoren, nämlich logischen und/oder mathematischen Operatoren, und Steuerobjekten. Bei Steuerobjekten kann es sich zum Beispiel um eine Anweisungsliste, Transaktionscontainer, Prozesscontainer usw. handeln. Input-Datenobjekten eines Steuerobjekts sind gleichzeitig Output-Datenobjekte von anderen Operatoren oder Steuerobjekten. Zur Ausführung des Operatorbaums werden die Objekte getriggert. Das Triggern der Objekte wird entlang der Hierarchie und/oder der Vernetzung der Objekte ausgelöst, wenn alle benötigten Input-Datenobjekte getriggert haben. Datenobjekte triggern dann, wenn sich deren Wert ändert oder deren Trigger ausgelöst wird.

Durch Verschaltung von Input-Datenobjekten mit Eingängen von Sensoren oder Aktuatoren sowie durch Verschaltung von Output-Datenobjekten mit Ausgängen von Sensoren oder Aktuatoren wird der Operatorbaum in das reale Automatisierungsumfeld eingebunden und so das ablauffähige Automatisierungsprogramm bereitgestellt. Durch Verwendung von transaktionsfähigen, realtimefähigen und/oder fehlertoleranten Objekten werden ausführbare Operatorbäume geschaffen, die selbst wieder transaktionsfähige, realtimefähig und/oder fehlertolerant sind.

Mithilfe des erfindungsgemäßen Verfahrens sowie der erfindungsgemäßen Vorrichtung zur Programmierung und/oder Ausführung von Programmen industrieller Automatisierungssysteme lassen sich eine Vielzahl von Vorteilen erzielen. So ist ein mithilfe der Erfindung generiertes Programm auf allen Komponenten eines Automatisierungssystems ausführbar, auf denen die Objektmaschine bzw. die Realtime-Objektmaschine implementiert ist. Das Programm kann zur Laufzeit geändert werden. Es lassen sich demnach lokale Teilbäume des als ausführbaren Operatorbaums bereitgestellten Programms hinzufügen, ändern bzw. entfernen. Weiterhin ist ein derartiges Programm selbstbeschreibend, wenn selbstbeschreibende Objekte verwendet werden. Aus dem ausführbaren Operatorbaum ist das maschinen-unabhängige Programm visualisierbar. Eine Ablage für Programme kann daher entfallen. Weiterhin wird mithilfe der Erfindung die Engineering-Zeit verkürzt. Die Programmierung erfolgt rein über lexikalische und semantische Funktionen. Eine Generierung und Optimierung von Maschinencodes ist nicht mehr erforderlich. Bei der Änderung der Programmierung müssen lediglich geänderte Programm-Teilbäume analysiert und geladen werden. Der Rest des Programms kann unverändert bleiben. Das Laden von Programmen auf eine Komponente eines Automatisierungssystems kann inkrementell erfolgen, das heißt, dass lediglich der geänderte Programmteil geladen werden muss und nicht das gesamte Programm.

## Patentansprüche

1. Verfahren zur Programmierung und/oder Ausführung von Programmen für industrielle Automatisierungssysteme, basierend auf mindestens einer Rechnereinheit mit Eingabehilfsmitteln, Ausgabehilfsmitteln, sowie vorzugsweise mindestens einer Anzeigevorrichtung, wobei Bausteine und Funktionen, die jeweils Teilaufgaben einer Automatisierungslösung repräsentieren, mit den Eingabehilfsmitteln und gegebenenfalls der Anzeigevorrichtung modelliert und/oder erstellt werden, wobei die Bausteine und Funktionen mit den Eingabehilfsmitteln und gegebenenfalls der Anzeigevorrichtung strukturiert und vernetzt werden, so dass dieselben als mindestens ein maschinen-unabhängiges Programm mindestens einen hierarchischen Baum bilden, **dadurch gekennzeichnet, dass** das oder jedes maschinen-unabhängige Programm in Form mindestens eines hierarchischen Baums in die entsprechenden Komponenten des Automatisierungssystems geladen wird, und dass die entsprechenden Komponenten des Automatisierungssystems das oder jedes, in Form mindestens eines hierarchischen Baums vorliegende, maschinen-unabhängige Programm ausführen,
wobei das oder jedes maschinenunabhängige Programm in Form eines ausführbaren, hierarchischen Operatorbaums vorliegt.

2. Verfahren nach Anspruch 1, **dadurch gekennzeichnet, dass** das oder jedes maschinen-unabhängige Programm auf den entsprechenden Komponenten des Automatisierungssystems mit Hilfe mindestes einer denselben zugeordneten Objektmaschine ausführt wird.

3. Verfahren nach Anspruch 1 oder 2, **dadurch gekennzeichnet, dass** das oder jedes maschinen-unabhängige Programm, das in Form mindestens eines hierarchischen Objekt- bzw. Operatorbaums in den entsprechenden Komponenten des Automatisierungssystems vorliegt, interpretativ abgearbeitet wird.

4. Verfahren nach einem oder mehreren der Ansprüche 1 bis 3, **dadurch gekennzeichnet, dass** das oder jedes maschinen-unabhängige Programm in Form mindestens eines, der Darstellung des Programms in der oder jeder Anzeigevorrichtung strukturäquivalenten oder strukturähnlichen Objekt- bzw. Operatorbaums vorliegt.

5. Verfahren nach einem oder mehreren der Ansprüche 1 bis 4, **dadurch gekennzeichnet, dass** das Laden des oder jeden maschinen-unabhängigen Programms in die entsprechenden Komponenten des Automatisierungssystems unter Verwendung einer maschinen-unabhängigen, symbolischen Repräsentation des oder jeden hierarchischen Baums erfolgt.

6. Verfahren nach Anspruch 5, **dadurch gekennzeichnet, dass** die maschinen-unabhängige, symbolische Repräsentation des oder jeden hierarchischen Baums in Form von Byte Code oder in Form einer Auszeichnungssprache (Markup Language), insbesondere in Form von XML (Extended Markup Language), erfolgt.

7. Verfahren nach einem oder mehreren der Ansprüche 1 bis 6, **dadurch gekennzeichnet, dass** die oder jede Objektmaschine als Realtime-Objektmaschine mit deterministischen Antwort- und Zykluszeiten ausgebildet ist.

8. Verfahren nach einem oder mehreren der Ansprüche 1 bis 7, **dadurch gekennzeichnet, dass** die oder jede Objektmaschine Operatoren, insbesondere mathematische und logische Operatoren, und Objekte, insbesondere Datenobjekte und Steuerobjekte, zur Verfügung stellt, aus welchen das oder jedes maschinen-unabhängige Programm in Form des oder jeden hierarchischen Baums gebildet ist.

9. Verfahren nach Anspruch 8, **dadurch gekennzeichnet, dass** beim oder nach dem Laden des maschinen-unabhängigen Programms die Operatoren instantiiert und die symbolische Repräsentation des oder jeden hierarchischen Baums zur Generierung eines ablauffähigen Programms in physikalische Adressen übersetzt werden.

10. Verfahren nach einem oder mehreren der Ansprüche 1 bis 9, **dadurch gekennzeichnet, dass** die Objektmaschine als eine für sich abgeschlossene Funktionseinheit implementiert wird, die den oder jeden hierarchischen Baum zur Laufzeit abarbeitet.

11. Verfahren nach einem oder mehreren der Ansprüche 1 bis 9, **dadurch gekennzeichnet, dass** die Objektmaschine verteilt als mindestens ein Objekt implementiert wird, wobei der oder jeder hierarchische Objekt- bzw. Operatorbaum sich selbst abarbeitet.

12. Verfahren nach einem oder mehreren der Ansprüche 1 bis 11, **dadurch gekennzeichnet, dass** den Bausteinen und Funktionen, insbesondere Objekten, Modellinformationen und/oder Metainformationen mit den Eingabehilfsmitteln und gegebenenfalls der Anzeigevorrichtung zugeordnet werden.

13. Verfahren nach einem oder mehreren der Ansprüche 1 bis 12, **dadurch gekennzeichnet, dass** den Objekten des als hierarchischen Objekt- bzw. Operatorbaums vorliegenden, maschinen-unabhängigen Programms eine Sammlung von Infrastrukturdiensten bzw. Infrastrukturfunktionen zugeordnet ist, die auf die Objekte oder die den Objekten zugeordnete Metadaten generisch zugreifen, so dass ein Infrastrukturdienst bzw. eine Infrastrukturfunktion von allen Objekten benutzt werden kann und für alle Objekte mit Metadaten anwendbar ist.

14. Vorrichtung zur Programmierung und/oder Ausführung von Programmen für industrielle Automatisierungssysteme, basierend auf mindestens einer Rechnereinheit mit Eingabehilfsmitteln, Ausgabehilfsmitteln, sowie vorzugsweise mindestens einer Anzeigevorrichtung, mit Mitteln zum Modellieren und/oder Erstellen von Bausteinen und Funktionen, die jeweils Teilaufgaben einer Automatisierungslösung repräsentieren, und mit Mitteln zum Strukturieren der Bausteine und Funktionen und zum Vernetzten derselben, um so als mindestens ein maschinen-unabhängiges Programm mindestens einen hierarchischen Baum zu bilden, **gekennzeichnet durch** Mittel um das oder jedes maschinen-unabhängige Programm in Form mindestens eines hierarchischen Baums in die entsprechenden Komponenten des Automatisierungssystems zu laden, wobei die entsprechenden Komponenten des Automatisierungssystems das oder jedes, in Form mindestens eines hierarchischen Baums vorliegende, maschinen-unabhängige Programm ausführen, und wobei das oder jedes maschinenunabhängige Programm in Form eines ausführbaren, hierarchischen Operatorbaums vorliegt.

15. Vorrichtung nach Anspruch 14, **gekennzeichnet durch** mindestens eine den entsprechenden Komponenten des Automatisierungssystems zugeordnete Objektmaschine, um das oder jedes maschinen-unabhängige Programm auszuführen.

16. Vorrichtung nach Anspruch 14 oder 15, **dadurch gekennzeichnet, dass** das oder jedes maschinen-unabhängige Programm in Form mindestens eines, der Darstellung des Programms in der oder jeder Anzeigevorrichtung strukturäquivalenten oder strukturähnlichen Objekt- bzw. Operatorbaums vorliegt.

17. Vorrichtung nach Anspruche 15 oder 16, **dadurch gekennzeichnet, dass** die oder jede Objektmaschine als Realtime-Objektmaschine mit deterministischen Antwort- und Zykluszeiten ausgebildet ist.

18. Vorrichtung nach einem oder mehreren der Ansprüche 14 bis 17, **dadurch gekennzeichnet, dass** die oder jede Objektmaschine Operatoren, insbesondere mathematische und logische Operatoren, und Objekte, insbesondere Datenobjekte und Steuerobjekte, zur Verfügung stellt, aus welchen das oder jedes maschinen-unabhängige Programm in Form des oder jeden hierarchischen Baums gebildet ist.

19. Vorrichtung nach einem oder mehreren der Ansprüche 14 bis 18, **gekennzeichnet durch** Mitteln zum Zuordnen von Modellinformationen und/oder Metainformationen zu den Bausteinen und Funktionen.

20. Vorrichtung nach einem oder mehreren der Ansprüche 14 bis 19, **dadurch gekennzeichnet, dass** die Objektmaschine als eine für sich abgeschlossene Funktionseinheit implementiert ist, die den oder jeden hierarchischen Baum zur Laufzeit abarbeitet.

21. Vorrichtung nach einem oder mehreren der Ansprüche 14 bis 19, **dadurch gekennzeichnet, dass** die Objektmaschine verteilt als mindestens ein Objekt implementiert ist, wobei der oder jeder hierarchische Objekt- bzw. Operatorbaum sich selbst abarbeitet.

22. Vorrichtung nach einem oder mehreren der Ansprüche 14 bis 21, **dadurch gekennzeichnet, dass** den Objekten des als hierarchischen Objekt- bzw. Operatorbaums vorliegenden, maschinen-unabhängigen Programms eine Sammlung von Infrastrukturdiensten bzw. Infrastrukturfunktionen zugeordnet ist, die auf die Objekte über den Objekten zugeordnete Container zugreifen, so dass ein Infrastrukturdienst bzw. eine Infrastrukturfunktion von allen Objekten benutzt werden kann.

## Claims

1. Method for programming and/or executing programs for industrial automation systems, based on at least one computer unit with input aids, output aids and preferably at least one display device, with modules and functions respectively representing sub-tasks of an automation solution being modelled and/or created using the input aids and optionally the display device, with the modules and functions being structured and networked using the input aids and optionally the display device, so that they form at least one hierarchical tree as at least one machine-independent program, **characterised in that** the or each machine-independent program is loaded in the form of at least one hierarchical tree into the corresponding components of the automation system and that the corresponding components of the automation system execute the or each machine-independent program present in the form of at least one hierarchical tree,
the or each machine-independent program being present in the form of an executable, hierarchical operator tree.

2. Method according to claim 1, **characterised in that** the or each machine-independent program is executed on the corresponding components of the automation system with the aid of at least one object machine assigned to the same.

3. Method according to claim 1 or 2, **characterised in that** the or each machine-independent program, present in the form of at least one hierarchical object or operator tree in the corresponding components of the automation system, is processed interpretatively.

4. Method according to one or more of claims 1 to 3, **characterised in that** the or each machine-independent program is present in the form of at least one object or operator tree with a structure equivalent or similar to the representation of the program in the or each display device.

5. Method according to one or more of claims 1 to 4, **characterised in that** the or each machine-independent program is loaded into the corresponding components of the automation system using a machine-independent, symbolic representation of the or each hierarchical tree.

6. Method according to claim 5, **characterised in that** the machine-independent, symbolic representation of the or each hierarchical tree is in the form of byte code or a markup language, in particular in the form of XML (Extended Markup Language).

7. Method according to one or more of claims 1 to 6, **characterised in that** the or each object machine is configured as a real-time object machine with deterministic response and cycle times.

8. Method according to one or more of claims 1 to 7, **characterised in that** the or each object machine provides operators, in particular mathematical and logical operators, and objects, in particular data objects and control objects, from which the or each machine-independent program is formed in the form of the or each hierarchical tree.

9. Method according to claim 8, **characterised in that** the operators are instantiated during or after the loading of the machine-independent program and the symbolic representation of the or each hierarchical tree is converted to physical addresses to generate a loadable program.

10. Method according to one or more of claims 1 to 9, **characterised in that** the object machine is implemented as a function unit that is closed per se, which processes the or each hierarchical tree to the runtime.

11. Method according to one or more of claims 1 to 9, **characterised in that** the object machine is implemented in a distributed manner as at least one object, with the or each hierarchical object or operator tree processing itself.

12. Method according to one or more of claims 1 to 11, **characterised in that** the modules and functions, in particular objects, are assigned model information and/or meta-information using the input aids and optionally the display device.

13. Method according to one or more of claims 1 to 12, **characterised in that** the objects of the machine-independent program present as a hierarchical object or operator tree are assigned a collection of infrastructure services or infrastructure functions, which access the objects or the metadata assigned to the objects in a generic manner, so that an infrastructure service or infrastructure function can be used by all the objects and is applicable to all objects with metadata.

14. Device for programming and/or executing programs for industrial automation systems, based on at least one computer unit with input aids, output aids and preferably at least one display device, with means for modelling and/or creating modules and functions, which respectively represent the sub-tasks of an automation solution, and with means for structuring the modules and functions and for networking the same, to form at least one hierarchical tree as at least one machine-independent program, **characterised by** means to load the or each machine-independent program in the form of at least one hierarchical tree into the corresponding components of the automation system, with the corresponding components of the automation system executing the or each machine-independent program present in the form of at least one executable, hierarchical operator tree
and the or each machine-independent program being present in the form of an executable, hierarchical operator tree.

15. Device according to claim 14, **characterised by** at least one object machine assigned to the corresponding components of the automation system to execute the or each machine-independent program.

16. Device according to claim 14 or 15, **characterised in that** the or each machine-independent program is present in the form of at least one object or operator tree with a structure equivalent or similar to the representation of the program in the or each display device.

17. Device according to claim 15 or 16, **characterised in that** the or each object machine is configured as a real-time object machine with deterministic response and cycle times.

18. Device according to one or more of claims 14 to 17, **characterised in that** the or each object machine provides operators, in particular mathematical and logical operators, and objects, in particular data objects and control objects, from which the or each machine-independent program is formed in the form of the or each hierarchical tree.

19. Device according to one or more of claims 14 to 18, **characterised by** means for assigning model information and/or meta-information to the modules and functions.

20. Device according to one or more of claims 14 to 19, **characterised in that** the object machine is implemented as a function unit that is closed per se, which processes the or each hierarchical tree to the runtime.

21. Device according to one or more of claims 14 to 19, **characterised in that** the object machine is implemented in a distributed manner as at least one object, with the or each hierarchical object or operator tree processing itself.

22. Device according to one or more of claims 14 to 21, **characterised in that** the objects of the machine-independent program present as a hierarchical object or operator tree are assigned a collection of infrastructure services or infrastructure functions, which access the objects via the containers assigned to the objects, so that an infrastructure service or infrastructure function can be used by all the objects.

## Revendications

1. Procédé pour programmer et/ou pour exécuter des programmes pour des systèmes d'automatisation industriels sur la base d'au moins une unité informatique comportant des moyens de saisie, des moyens de production en sortie et de préférence au moins un dispositif d'affichage, des blocs et des fonctions qui représentent respectivement des sous-tâches d'une solution d'automatisation étant modélisés et/ou créés au moyen des moyens de saisie et, le cas échéant, du dispositif d'affichage, les blocs et fonctions étant structurés et reliés en réseau au moyen des moyens de saisie et, le cas échéant, du dispositif d'affichage, de sorte qu'ils forment, en tant qu'au moins un programme indépendant d'une machine, au moins une arborescence hiérarchique, **caractérisé en ce que** le ou chaque programme indépendant d'une machine est chargé sous la forme d'au moins une arborescence hiérarchique dans les composants correspondants du système d'automatisation et **en ce que** les composants correspondants du système d'automatisation exécutent le ou chaque programme indépendant d'une machine et se présentant sous la forme d'au moins une arborescence hiérarchique, le ou chaque programme indépendant d'une machine se présentant sous la forme d'une arborescence d'opérateurs hiérarchique exécutable.

2. Procédé selon la revendication 1, **caractérisé en ce que** le ou chaque programme indépendant d'une machine est exécuté sur les composants correspondants du système d'automatisation à l'aide d'au moins une machine d'objet qui leur est associée.

3. Procédé selon la revendication 1 ou 2, **caractérisé en ce que** le ou chaque programme indépendant d'une machine et se présentant sous la forme d'au moins une arborescence hiérarchique d'objets ou d'opérateurs dans les composants correspondants du système d'automatisation fait l'objet d'une exécution interprétative.

4. Procédé selon l'une ou plusieurs des revendications 1 à 3, **caractérisé en ce que** le ou chaque programme indépendant d'une machine se présente sous la forme d'au moins une arborescence d'objets ou d'opérateurs équivalente ou similaire, par sa structure, à la représentation du programme dans le ou chaque dispositif d'affichage.

5. Procédé selon l'une ou plusieurs des revendications 1 à 4, **caractérisé en ce que** le chargement du ou de chaque programme indépendant d'une machine dans les composants correspondants du système d'automatisation s'effectue avec utilisation d'une représentation symbolique, indépendante d'une machine, de l'arborescence hiérarchique ou de chaque arborescence hiérarchique.

6. Procédé selon la revendication 5, **caractérisé en ce que** la représentation symbolique, indépendante d'une machine, de l'arborescence hiérarchique ou de chaque arborescence hiérarchique s'effectue sous la forme d'un code de byte ou sous la forme d'un langage de balisage (Markup Language), en particulier sous la forme du langage XML (Extended Markup Language).

7. Procédé selon l'une ou plusieurs des revendications 1 à 6, **caractérisé en ce que** la ou chaque machine d'objets est réalisée en tant que machine d'objets en temps réel avec des temps de réponse et de cycle déterministes.

8. Procédé selon l'une ou plusieurs des revendications 1 à 7, **caractérisé en ce que** la ou chaque machine d'objets met à disposition des opérateurs, et plus particulièrement des opérateurs mathématiques et logiques, et des objets, et plus particulièrement des objets de données et de commande, à partir desquels est formé le ou chaque programme indépendant d'une machine sous la forme de l'arborescence hiérarchique ou de chaque arborescence hiérarchique.

9. Procédé selon la revendication 8, **caractérisé en ce que**, lors du ou après le chargement du programme indépendant d'une machine, les opérateurs sont instanciés et la représentation symbolique de l'arborescence hiérarchique ou de chaque arborescence hiérarchique est traduite en adresses physiques pour générer un programme exécutable.

10. Procédé selon l'une ou plusieurs des revendications 1 à 9, **caractérisé en ce que** la machine d'objets est implémentée en tant qu'unité fonctionnelle autonome qui exécute l'arborescence hiérarchique ou chaque arborescence hiérarchique pendant le temps d'exécution.

11. Procédé selon l'une ou plusieurs des revendications 1 à 9, **caractérisé en ce que** la machine d'objets est implémentée de manière distribuée en tant qu'au moins un objet, l'arborescence hiérarchique d'objets ou d'opérateurs ou chaque arborescence hiérarchique d'objets ou d'opérateurs s'exécutant elle-même.

12. Procédé selon l'une ou plusieurs des revendications 1 à 11, **caractérisé en ce que** des informations de modèles et/ou des méta-informations sont associées aux blocs et fonctions, et plus particulièrement à des objets, au moyen des moyens de saisie et, le cas échéant, du dispositif d'affichage.

13. Procédé selon l'une ou plusieurs des revendications 1 à 12, **caractérisé en ce qu'**est associé aux objets du programme indépendant d'une machine et se présentant en tant qu'arborescence hiérarchique d'objets ou d'opérateurs un ensemble de services d'infrastructure ou de fonctions d'infrastructure qui accèdent de manière générique aux objets ou aux métadonnées qui sont associées aux objets, de sorte qu'un service d'infrastructure ou une fonction d'infrastructure peuvent être utilisés par tous les objets et sont applicables à tous les objets avec des métadonnées.

14. Dispositif pour programmer et/ou pour exécuter des programmes pour des systèmes d'automatisation industriels sur la base d'au moins une unité informatique comportant des moyens de saisie, des moyens de production en sortie et de préférence au moins un dispositif d'affichage, pourvu de moyens pour modéliser et/ou créer des blocs et des fonctions qui représentent respectivement des sous-tâches d'une solution d'automatisation, et de moyens pour structurer les blocs et fonctions et les relier en réseau pour ainsi former au moins une arborescence hiérarchique en tant qu'au moins un programme indépendant d'une machine, **caractérisé par** des moyens pour charger le ou chaque programme indépendant d'une machine sous la forme d'au moins une arborescence hiérarchique dans les composants correspondants du système d'automatisation, les composants correspondants du système d'automatisation exécutant le ou chaque programme indépendant d'une machine et se présentant sous la forme d'au moins une arborescence hiérarchique, et le ou chaque programme indépendant d'une machine se présentant sous la forme d'une arborescence d'opérateurs hiérarchique exécutable.

15. Dispositif selon la revendication 14, **caractérisé par** au moins une machine d'objets associée aux composants correspondants du système d'automatisation pour exécuter le ou chaque programme indépendant d'une machine.

16. Dispositif selon la revendication 14 ou 15, **caractérisé en ce que** le ou chaque programme indépendant d'une machine se présente sous la forme d'au moins une arborescence d'objets ou d'opérateurs équivalente ou similaire, par sa structure, à la représentation du programme dans le ou chaque dispositif d'affichage.

17. Dispositif selon la revendication 15 ou 16, **caractérisé en ce que** la ou chaque machine d'objets est réalisée en tant que machine d'objets en temps réel avec des temps de réponse et de cycle déterministes.

18. Dispositif selon l'une ou plusieurs des revendications 14 à 17, **caractérisé en ce que** la ou chaque machine d'objets met à disposition des opérateurs, et plus particulièrement des opérateurs mathématiques et logiques, et des objets, et plus particulièrement des objets de données et de commande, à partir desquels est formé le ou chaque programme indépendant d'une machine sous la forme de l'arborescence hiérarchique ou de chaque arborescence hiérarchique.

19. Dispositif selon l'une ou plusieurs des revendications 14 à 18, **caractérisé par** des moyens pour associer des informations de modèles et/ou des méta-informations aux blocs et fonctions.

20. Dispositif selon l'une ou plusieurs des revendications 14 à 19, **caractérisé en ce que** la machine d'objets est implémentée en tant qu'unité fonctionnelle autonome qui exécute l'arborescence hiérarchique ou chaque arborescence hiérarchique pendant le temps d'exécution.

21. Dispositif selon l'une ou plusieurs des revendications 14 à 19, **caractérisé en ce que** la machine d'objets est implémentée de manière distribuée en tant qu'au moins un objet, l'arborescence hiérarchique d'objets ou d'opérateurs ou chaque arborescence hiérarchique d'objets ou d'opérateurs s'exécutant elle-même.

22. Dispositif selon l'une ou plusieurs des revendications 14 à 21, **caractérisé en ce qu'**est associé aux objets du programme indépendant d'une machine et se présentant en tant qu'arborescence hiérarchique d'objets ou d'opérateurs un ensemble de services d'infrastructure ou de fonctions d'infrastructure qui accèdent aux objets via des conteneurs associés aux objets, de sorte qu'un service d'infrastructure ou une fonction d'infrastructure peuvent être utilisés par tous les objets.
